(19) Europäisches Patentamt
European Patent Office
Office européen des brevets

(11) **EP 1 910 223 B1**

(12) **EUROPÄISCHE PATENTSCHRIFT**

(45) Veröffentlichungstag und Bekanntmachung des Hinweises auf die Patenterteilung:
**18.02.2009 Patentblatt 2009/08**

(21) Anmeldenummer: **06721968.3**

(22) Anmeldetag: **22.05.2006**

(51) Int Cl.:
***C01B 13/11*** *(2006.01)*

(86) Internationale Anmeldenummer:
**PCT/CH2006/000269**

(87) Internationale Veröffentlichungsnummer:
**WO 2007/014474 (08.02.2007 Gazette 2007/06)**

(54) **OZONGENERATOR**

OZONE GENERATOR

GENERATEUR D'OZONE

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **03.08.2005 PCT/CH2005/000458**

(43) Veröffentlichungstag der Anmeldung:
**16.04.2008 Patentblatt 2008/16**

(73) Patentinhaber: **Degremont S.A.**
**92508 Rueil Malmaison (FR)**

(72) Erfinder: **VEZZU, Guido**
**CH-8422 Pfungen (CH)**

(74) Vertreter: **Fischer, Britta Ruth**
**E. BLUM & CO. AG**
**Vorderberg 11**
**8044 Zürich (CH)**

(56) Entgegenhaltungen:
**DE-A1- 3 220 018     SU-A1- 1 763 357**
**US-A- 4 886 645      US-A- 5 145 653**
**US-A- 5 211 919**

**Beschreibung**

Hintergrund

Die Erfindung betrifft einen Ozongenerator mit zwei Elektroden und einer dazwischen liegenden Dielektrikumsschicht gemäss dem Oberbegriff des Anspruchs 1.

Stand der Technik

Aus der Patentschrift DE 32 20 018 C2 ist ein Ozongenerator mit zwei röhrenförmigen Elektroden und einer dazwischen liegenden Dielektrikumsschicht bekannt, die so angeordnet sind, dass zwischen ihnen ein als Ozonisierungsspalt dienender Zwischenraum ausgebildet ist, wobei durch den Ozonisierungsspalt ein sauerstoffhaltiges Gas geleitet wird. Die Spaltbreite des Ozonisierungsspalts ist einlassseitig kleiner als auslassseitig. Die Dielektrikumskapazität kann in Strömungsrichtung des sauerstoffhaltigen Gases kleiner werden.

Der vorliegenden Erfindung liegt die Aufgabe zugrunde, einen Ozongenerator mit einem guten Wirkungsgrad zu schaffen. Das heisst, es soll ein Ozongenerator geschaffen werden, der eine hohe Menge Ozon pro aufgewandte Energie erzeugt.

Diese Aufgabe wird von einem Ozongenerator mit den Merkmalen des Anspruchs 1 gelöst.

Bei dem erfindungsgemässen Ozongenerator sind die zwei Elektroden und die Dielektrikumsschicht derart angeordnet, dass zwischen der Dielektrikumsschicht und einer der Elektroden ein Ozonisierungsspalt ausgebildet ist, durch den ein sauerstoffhaltiges Gas leitbar ist. In Strömungsrichtung des Gases wird eine Dielektrikumskapazität der Dielektrikumsschicht kleiner. Alternativ oder zusätzlich kann die Schichtdicke der Dielektrikumsschicht grösser werden. Eine Spaltbreite des Ozonisierungsspalts ist einlassseitig grösser als auslassseitig. Die Spaltbreite des Ozonisierungsspalts wird in Strömungsrichtung des Gases vorzugsweise kontinuierlich oder diskret grösser. Selbstverständlich kann die Spaltbreite auch über einen bestimmten Bereich diskret und über einen anderen Bereich kontinuierlich grösser werden. Die diskrete Vergrösserung des Ozonisierungsspalts kann beispielsweise über eine stufenförmige Ausgestaltung einer oder beider Elektroden erfolgen.

Bei kleinen Ozonkonzentrationen ist der Wirkungsgrad der Ozonerzeugung im Wesentlichen nicht temperaturabhängig. Bei grösseren Ozonkonzentrationen verschlechtert sich der Wirkungsgrad dahingehend mit steigender Temperatur. Die Einspeisung von Energie in die so genannten Entladungskanäle führt zu lokalen, momentanen Temperaturüberhöhungen. Diese Temperaturüberhöhungen lassen sich durch eine Einstellung der Leistungsaufnahme in Strömungsrichtung des sauerstoffhaltigen Gases beeinflussen.

Die von dem Ozongenerator aufgenommene Leistung P in Kilowatt ergibt sich aus der folgenden Formel:

$$P = 4fC_D \frac{1}{1+\beta} U_{min} (U_{peak} - U_{min}),$$

wobei $U_{peak}$ die so genannte Peakspannung bzw. der Spitzenwert der angelegten Spannung in Volt ist, $U_{min}$ die so genannte Zündspannung bzw. die Minimumspannung angibt, ab dessen Erreichen der Ozongenerator sich in einem stabilen Zustand befindet und Mikroentladungen über den gesamten Halbzyklus der angelegten Wechselspannung stattfinden, f die Frequenz der angelegten Spannung in Hertz, $C_D$ die Dielektrikumskapazität, $\beta$ der Quotienten $C_G/C_D$ und $C_G$ die Gasspalt- bzw. Ozonisierungsspaltkapazität ist. Insbesondere im Teillastbetrieb kann es dazu kommen, dass nicht die gesamte Dielektrikumsschicht aktiv ist. Dieses Phänomen kann dadurch berücksichtigt werden, dass die oben genannte Formel mit einer Konstante $\alpha$ multipliziert wird, die die Flächenbelegung mit Mikroentladungen bzw. die Packungsdichte der Mikroentladungen pro Fläche der Dielektrikumsschicht berücksichtigt. Durch die Konstante $\alpha$ kann die effektive Belegung der Dielektrikumsfläche bezüglich der Anzahl der Mikroentladungen pro Flächeneinheit der Dielektrikumsschicht berücksichtigt werden.

Der Quotient aus der Gasspaltkapazität und der Dielektrikumskapazität $C_g/C_d$ wird auch als Dämpfung bezeichnet. Eine hohe Dielektrikumskapazität respektive geringe Dämpfung führt zu stärkeren, weniger häufigen Mikroentladungen mit einer geringen Flächenbelegung bzw. Packungsdichte $\alpha$ der Mikroentladungen pro Dielektrikumsfläche. Eine Erniedrigung der Dielektrikumskapazität bei konstanter Gasspaltkapazität führt zu einer höheren Dämpfung $\beta$ und grösserer Packungsdichte $\alpha$ bei im Wesentlichen gleich bleibender Leistung P. Entsprechend führt eine Verringerung der Dielektrikumskapazität zu einer Verringerung der von dem Ozongenerator aufgenommenen Leistung. Von der Leistung ist, wie bereits oben ausgeführt, die Temperatur im Ozonisierungsspalt abhängig, wobei sich der Wirkungsgrad bei hohen Ozonkonzentrationen, d.h. insbesondere an der Ausgangsseite des Ozongenerators, vermindert.

Zur Erhöhung des Wirkungsgrades wird daher vorgeschlagen, die Dielektrikumskapazität von der Eingangsseite zur Ausgangsseite des Ozongenerators hin zu vermindern. Eine entsprechende Wirkung lässt sich auch dadurch erzielen, dass die Dicke der Dielektrikumsschicht von der Eingangsseite zur Ausgangsseite erhöht wird. Der Wirkungsgrad des Ozongenerators verbessert sich, wenn einlassseitig eine höhere Leistungsaufnahme erfolgt als auslassseitig.

Ferner kann eine zum Ausgang hin abnehmende Spaltbreite des Ozonisierungsspalts eine Steigerung des Wirkungsgrads bewirken. So nimmt die optimale Spaltbreite mit zunehmendem Ozongehalt des Gases ab. Beispielsweise liegt bei einem Gasdruck von 3,5 bar absolut, einer Kühlwassertemperatur von 17°C, einer Leistungsdichte von 3 kW/m$^2$ und einer Frequenz von 975 Herz das Effizienzmaximum für Luft mit geringem Ozongehalt als Gas (im Wesentlichen 1 Gewichtsprozent) bei einer Spaltbreite von etwas mehr als 0,5 mm, während es für Luft mit hohem Ozongehalt als Gas (im Wesentlichen 5 Gewichtsprozent) bei einer Spaltbreite von weniger als 0,4 mm liegt. Entsprechendes gilt auch, wenn reiner Sauerstoff als zu ozonisierendes Gas verwendet wird. Die (relative) Ozonisierungseffizienz ist dabei definiert als der Wert k/E, wobei k eine vorgegebene Konstante und E die pro Kilogramm Ozon benötigte elektrische Energie ist. In dieser Hinsicht wird Bezug genommen auf die internationale Anmeldung PCT/CH2005/000458, deren Inhalt hiermit in diese Anmeldung aufgenommen wird. In diesem Zusammenhang wird insbesondere auf die Diagramme hingewiesen, die die Effizienz der Ozonerzeugung in Abhängigkeit der Spaltdicke bzw. -breite für Luft oder Sauerstoff mit unterschiedlichem Ozongehalt darstellen und die dazugehörigen Beschreibungsteile.

Ein weiterer Vorteil der abnehmenden Spaltbreite liegt darin, dass die Querschnittsfläche des Ozonisierungsspalts zum Auslassbereich hin abnimmt. Dies führt zu einer zunehmend höheren Flussgeschwindigkeit. Somit fliesst das zu ozonisierende Gas umso schneller, je mehr Ozon es enthält. Auf diese Weise kann der Einfluss von Abbauprozessen auf die Ozongenerierung verringert werden. Solche Abbauprozesse resultieren beispielsweise aus Rückschlägen von Ionen von der Oberfläche der Elektroden, was wiederum zu einer Staubbildung in Form von Metalloxyden führt. Dieser Effekt wird auch als Sputtering-Effekt bezeichnet. Durch die Staubbildung kommt es zu einer Staubbelegung der der Dielektrikumsschicht gegenüberliegenden Elektrode, was wiederum die Ozonisierungsspaltkapazität begrenzt.

Bei konstanter Schichtdicke bzw. konstanter Dielektrikumskapazität ist nach dem Einlaufen des Ozongenerators die lokale Gewichtung der Leistungsaufnahme zu gering bzw. es erfolgt keine lokale Gewichtung des Leistungseintrags, so dass keine wesentliche Wirkungsgradsteigerung erzielt werden kann. Durch die erfindungsgemäss zum Auslass hin erfolgende Verringerung der Dielektrikumskapazität und/oder Vergrösserung der Schichtdicke der Dielektrikumsschicht und Verringerung der Spaltbreite erfolgt eine lokale Gewichtung der Leistungsaufnahme durch den Ozongenerator. Diese Massnahmen führen für sich genommen oder in Kombination vorteilhafterweise zu einer Stabilisierung der Leistungsaufnahme und somit zu einer Verkürzung der Einlaufzeit des Ozongenerators.

Zur Verringerung des sogenannten Sputtering-Effekts wird üblicherweise Stickoxyd, insbesondere N$_2$O$_5$, dem zu ozonisierenden Gas zugesetzt. Das Stickoxyd führt zu einer zusätzlichen Emission von UV-Licht, was wiederum zu ungehemmteren Entladungen führt, so dass das Spannungsniveau der Betriebsspannung gesenkt werden kann. Ferner schliessen die Stickoxyde die Metalloxyde ein und verhindern dadurch die Bildung von Staub. Durch das Stickoxyd erfolgt somit eine Passivierung der auf den Oberflächen der Elektroden sich als Staub ablagernden Metalloxyde.

Bei dem erfindungsgemässen Ozongenerator erfolgt eine lokal gewichtete Leistungsaufnahme dadurch, dass sich die Spaltbreite zum Auslass hin verkleinert und sich in Strömungsrichtung des Gases die Dielektrikumskapazität verringert und/oder die Schichtdicke des Dielektrikums vergrößert. Durch die lokal gewichtete Leistungsaufnahme des Ozongenerators nimmt der Einfluss der Oberfläche der Elektroden ab und über die Gewichtung der Leistungsaufnahme kann die Robustheit des Ozongenerators erhöht werden. Dies hat beispielsweise den Vorteil, dass weniger Stickstoff bzw. Stickoxyd zur Passivierung der auf den Oberflächen der Elektroden sich ablagernden Metalloxyde benötigt wird. Es kann beispielsweise ausreichend sein, Stickstoff in einer Grössenordnung von 2000 ppm einzusetzen. Ferner kann die Einlaufdauer des Ozongenerators auf weniger als 12 Stunden reduziert werden, während sie bei üblichen Ozongeneratoren mit konstantem Ozonisierungsspalt, konstanter Dielektrikumskapazität und konstanter Schichtdicke der Dielektrikumsschicht mehr als 500 Stunden beträgt.

Auch bei nicht-idealen Betriebsbedingungen verhält sich der erfindungsgemässe Ozongenerator robust und ermöglicht einen störungsfreien bzw. weitestgehend störungsfreien Betrieb auch bei Ozonkonzentrationen, die über den Ozonkonzentrationen liegen können, welche bei Ozongeneratoren mit konstanter Spaltbreite, konstanter Dielektrikumskapazität und konstanter Schichtdicke der Dielektrikumsschicht üblich sind. Nicht-ideale Bedingungen umfassen beispielsweise Stickstoffarmut, Druckstösse, Ozonkonzentrationen nahe der Vergiftungsgrenze, einen hohen Taupunkt bzw. eine hohe Temperatur des Kondensierens und/oder erhöhte Spuren von Kohlenwasserstoffen im zu ozonisierenden Gas. Ein hoher Taupunkt sowie die Präsenz von Spuren von Kohlenwasserstoffen im zu ozonisierenden Gas führen im Ozonisierungsspalt zu einer Benetzung der Oberflächen der Elektroden. Diese Benetzung der Elektroden hat zur Folge, dass der Ozongenerator selbständig zu pulsen beginnt. Unter dem Begriff "Pulsen" wird das Auftreten einer Folge regelmässig wiederkehrender, gleichartiger Impulse bzw. Funken verstanden. Da bei dem erfindungsgemässen Ozongenerator eine lokal gewichtete Leistungsaufnahme erfolgt, kann der Einfluss des Pulsens auf den Wirkungsgrad verringert werden.

Gemäss einem bevorzugten Ausführungsbeispiel der Erfindung sind einzelne in Serie geschaltete Abschnitte mit im jeweiligen Abschnitt konstanter Dielektrikumskapazität vorgesehen, wobei stromabwärts gelegene Abschnitte die gleiche oder eine kleinere Dielektrikumskapazität aufweisen als stromaufwärts gelegene Abschnitte. Zusätzlich oder alternativ können einzelne in Serie geschaltete Abschnitte mit im jeweiligen Abschnitt konstanter Schichtdicke der Dielektrikumsschicht vorgesehen sein, wobei stromabwärts gelegene Abschnitte die gleiche oder eine grössere Schichtdicke aufweisen als stromaufwärts gelegene Abschnitte. Weiter zusätzlich oder alternativ können einzelne in Serie geschaltete Abschnitte mit dem jeweiligen Abschnitt konstanter Spaltbreite des Ozonisierungsspalts vorgesehen sein, wobei stromabwärts gelegene Abschnitte eine kleinere Spaltbreite aufweisen als stromaufwärts gelegene Abschnitte.

Gemäss einem besonders bevorzugten Ausführungsbeispiel weisen die Abschnitte eine im Wesentlichen gleiche Länge auf und das Verhältnis von Abschnitten mit einer ersten Dielektrikumskapazität zu Abschnitten mit einer zweiten Dielektrikumskapazität, wobei die zweite Dielektrikumskapazität grösser als die erste Dielektrikumskapazität ist, ist bei einer Gesamtzahl von Abschnitten, die durch 4 teilbar ist, gleich dem Verhältnis von 1:3 und bei einer Gesamtzahl von Abschnitten, die durch 3 und nicht durch 4 teilbar ist, gleich dem Verhältnis von 1:2. Alternativ oder zusätzlich kann das Verhältnis von Abschnitten mit einer ersten Schichtdicke zu Abschnitten mit einer zweiten Schichtdicke, die grösser ist als die erste Schichtdicke, bei einer durch 4 teilbaren Gesamtzahl von Abschnitten 1:3 betragen und einer bei einer durch 3 aber nicht durch 4 teilbaren Gesamtzahl von Abschnitten 1:2 betragen. Weiter alternativ oder zusätzlich kann das Verhältnis von Abschnitten mit einer ersten Spaltbreite zu Abschnitten mit einer zweiten, kleineren Spaltbreite, bei einer durch 4 teilbaren Gesamtzahl von Abschnitten 1:3 betragen und bei einer durch 3 aber nicht durch 4 teilbaren Gesamtzahl von Abschnitten 1:2 betragen.

Bei einem Ozongenerator, der in Abschnitte eingeteilt ist, berechnet sich die gesamte vom Ozongenerator aufgenommene Leistung gemäss der Formel:

$$P = 4f \sum_{i=1}^{n} \alpha C_{D,i} \frac{1}{1+\beta_i} U_{min,i}(U_{peak} - U_{min,i}),$$

wobei der Index i den i-ten Abschnitt und n die Gesamtzahl der Abschnitte kennzeichnen.

Bei einem Verhältnis der Abschnitte von 1:2, kann durch entsprechende Wahl der Spaltbreite und/oder der Dielektrikumskapazität und/oder der Schichtdicke der Dielektrikumsschicht des ersten Abschnitts im Verhältnis zu den entsprechenden Grössen der weiteren Abschnitte erreicht werden, dass bereits im ersten Abschnitt ungefähr 2/3 der Ozonkonzentration mit ca. 1/3 der hierfür erforderlichen Energie erzielt wird. Durch eine möglichst hohe Leistungsaufnahme im ersten Abschnitt wird somit bereits eine hohe Ozonkonzentration erreicht, beispielsweise 2/3 der Zielkonzentration, während in den zwei sich in Strömungsrichtung an den ersten Abschnitt anschliessenden Abschnitten durch entsprechende Wahl der Dielektrikumskapazität eine gedämpfte Leistungsaufnahme erfolgt, um auf die endgültige Zielkonzentration zu kommen.

Hierdurch wird bewirkt, dass gerade bei noch relativ niedrigen Ozonkonzentrationen höhere Temperaturen auftreten, während mit steigender Ozonkonzentration die Temperaturen abnehmen. Dies hat eine Steigerung des Wirkungsgrades des Ozongenerators zur Folge.

Alternativ oder zusätzlich zu einer Variation von Spaltbreite, Dielektrikumskapazität und/oder Schichtdicke der Dielektrikumsschicht kann eine lokal gewichtete Leistungsaufnahme des Ozongenerators über die Spannungsversorgung und/oder die Elektrodenlänge erfolgen. So kann beispielsweise in einlassseitige Abschnitte eine höhere Spannung eingespeist werden als in auslassseitige Abschnitte bzw. die Spitzenspannung kann von der Einlassseite zur Auslassseite hin abnehmen.

Kurze Beschreibung der Zeichnungen

Weitere vorteilhafte Ausgestaltungen der Erfindung ergeben sich aus den Unteransprüchen und aus den anhand der Zeichnung nachfolgend dargestellten Ausführungsbeispielen. Es zeigen:

Figur 1 eine Schnittdarstellung eines Ozongenerators,
Figur 2 eine Schnittdarstellung durch eine erste Ausführung einer Elektrodenanordnung eines erfindungsgemässen Ozongenerators,
Figur 3 eine Schnittdarstellung durch eine zweite Ausführung einer Elektrodenanordnung eines erfindungsgemässen Ozongenerators,
Figur 4 eine Schnittdarstellung durch eine dritte Ausführung einer Elektrodenanordnung eines erfindungsgemässen Ozongenerators und
Figur 5 eine Schnittdarstellung einer vierten Ausführung einer Elektrodenanordnung eines erfindungsgemässen Ozongenerators.

In den Figuren bezeichnen gleiche Bezugszeichen strukturell bzw. funktionell gleichwirkende Komponenten.

Wege zur Ausführung der Erfindung

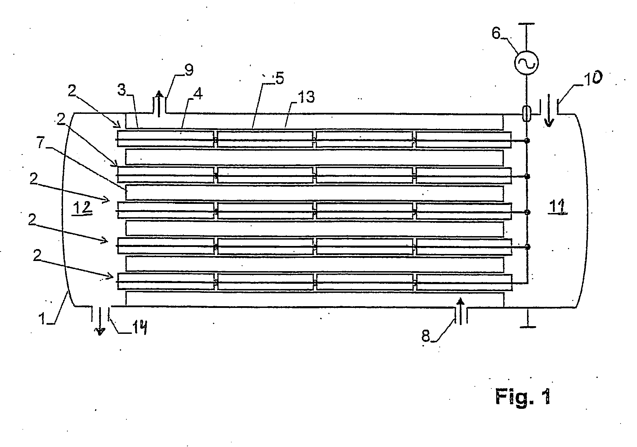

In der Figur 1 ist beispielhaft ein Ozongenerator dargestellt, der ein Gehäuse 1 umfasst, in welchem eine Vielzahl im Wesentlichen rohrförmiger Elektrodenanordnungen 2 vorgesehen ist. Jede Elektrodenanordnung 2 weist eine Innenelektrode 3 und eine rohrförmige Aussenelektrode 5 auf, welche konzentrisch um die Innenelektrode 3 angeordnet ist. Die Innenelektrode 3 ist auf mehreren, in Strömungsrichtung des Gases gesehen nacheinander angeordneten, im Wesentlichen zylinderförmigen Elektrodenträgern 4 angeordnet. Die Innenelektroden 3 sind mit einer Hochspannunngs-Wechselstromquelle 6 verbunden. Die Aussenelektroden 5 liegen auf Masse. Die Zwischenräume 7 zwischen den Elektrodenanordnungen 2 werden von einem Kühlwasser durchspült, welches über eine Zuflussleitung 8 zugeführt und über eine Abflussleitung 9 abgeführt wird.

Das zu ozonisierende, sauerstoffhaltige Gas, bei dem es sich auch um reinen Sauerstoff handeln kann, wird über eine Öffnung 10 in einen Einlassbereich bzw. Eingangsbereich 11 des Ozongenerators eingespeist, von wo aus es durch die zwischen den Innenelektroden 3 und den Aussenelektroden 5 der Elektrodenanordnungen 2 gebildeten Ozonisierungsspalte 13 fliesst. In den Ozonisierungsspalten 13 wird das Gas durch ein von den Elektroden 3 und 5 erzeugtes, quer zu den Ozonisierungsspalten 13 stehendes elektronisches Feld durch eine so genannte stille elektrische Entladung ozonisiert. Das ozonisierte Gas tritt in einen Auslassbereich bzw. einen Ausgangsbereich 12 am Ende der Elektrodenanordnungen 2 ein und entweicht von dort durch eine Abflussöffnung 14. Die Strömungsrichtung des Gases ist durch nicht näher bezeichnete Pfeile gekennzeichnet. Auch in den weiteren Figuren ist die Strömungsrichtung durch Pfeile gekennzeichnet.

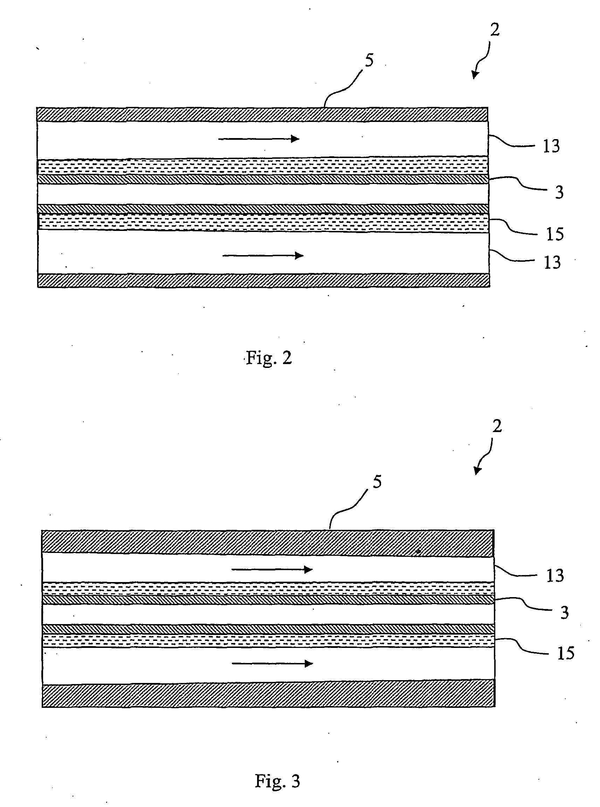

Figur 2 zeigt eine Schnittdarstellung eines Teilbereichs einer ersten Ausführung einer Elektrodenanordnung 2. Gemäss dieser ersten Ausführung hat die rohrförmige Aussenelektrode 5 einen konstanten Innendurchmesser. Die ebenfalls rohrförmige Innenelektrode 3 weist einen konstanten Aussendurchmesser auf. In Richtung zur Aussenelektrode 5 ist auf der Innenelektrode 3 eine Dielektrikumsschicht 15 angeordnet. Die Dielektrikumsschicht kann auch an anderer Stelle in dem nicht näher bezeichneten Zwischenraum zwischen Innenelektrode 3 und Aussenelektrode 5 vorgesehen sein. Die Schichtdicke der Dielektrikumsschicht wird auslassseitig grösser. Dies kann (wie dargestellt) zu einer Verringerung der Spaltbreite des Ozonisierungsspalts 13 führen. Anstelle oder zusätzlich zu der Zunahme der Schichtdicke der Dielektrikumsschicht 15 kann die Dielektrikumskapazität in Strömungsrichtung des Gases abnehmen.

Figur 3 zeigt eine Schnittdarstellung eines Teilbereichs einer zweiten Ausführung einer Elektrodenanordnung 2 eines erfindungsgemässen Ozongenerators. Gemäss der zweiten Ausführung nimmt der Innendurchmesser der Aussenelektrode in Strömungsrichtung des Gases konisch ab. Selbstverständlich sind Ausgestaltungen denkbar, bei denen der Innendurchmesser auf andere Weise abnimmt, beispielsweise diskret durch eine als Treppe ausgebildete Innenoberfläche der Aussenelektrode 5. Die Innenelektrode 3 weist einen konstanten Aussendurchmesser auf. Die Dielektrikumsschicht 15 hat ebenfalls einen konstanten Aussendurchmesser. Gemäss einer weiteren, nicht dargestellten Ausführung kann zusätzlich oder alternativ der Aussendurchmesser der Innenelektrode 3 in Strömungsrichtung zunehmen.

Die in den Figuren 1 und 2 dargestellten ersten und zweiten Ausführungen können miteinander kombiniert werden, so dass beispielsweise bei der zweiten Ausführung die Schichtdicke der Dielektrikumsschicht 15 in Strömungsrichtung zunimmt und/oder die Dielektrikumskapazität in Strömungsrichtung abnimmt.

Die Dielektrikumskapazität beträgt einlassseitig vorzugsweise 9 Nanofarad (nF) oder mehr als 9 Nanofarad (nF), insbesondere 10,63 Nanofarad (nF) und auslassseitig weniger als 9 Nanofarad (nF), insbesondere 7,8 Nanofarad (nF). Die Spaltbreite des Ozonisierungsspalts beträgt einlassseitig vorzugsweise mehr als 0,35 Millimeter, insbesondere 0,38 Millimeter, und auslassseitig weniger als 0,35 Millimeter, insbesondere 0,32 Millimeter. Die Dielektrikumskapazität nimmt somit in Strömungsrichtung vorzugsweise im Wesentlichen um 2,83 Nanofarad (nF) ab, während die Spaltbreite des Ozonisierungsspalts in Strömungsrichtung bevorzugt im Wesentlichen um 0,06 Millimeter abnimmt. Das Verhältnis von Gasspaltkapazität zu Dielektrikumskapazität beträgt einlassseitig bevorzugterweise im Wesentlichen 0,2 und ist auslassseitig vorzugsweise grösser als 0,3. Durch diese Wahl der Parameter Dielektrikumskapazität und Spaltbreite ergibt sich ein besonders guter Wirkungsgrad des Ozongenerators.

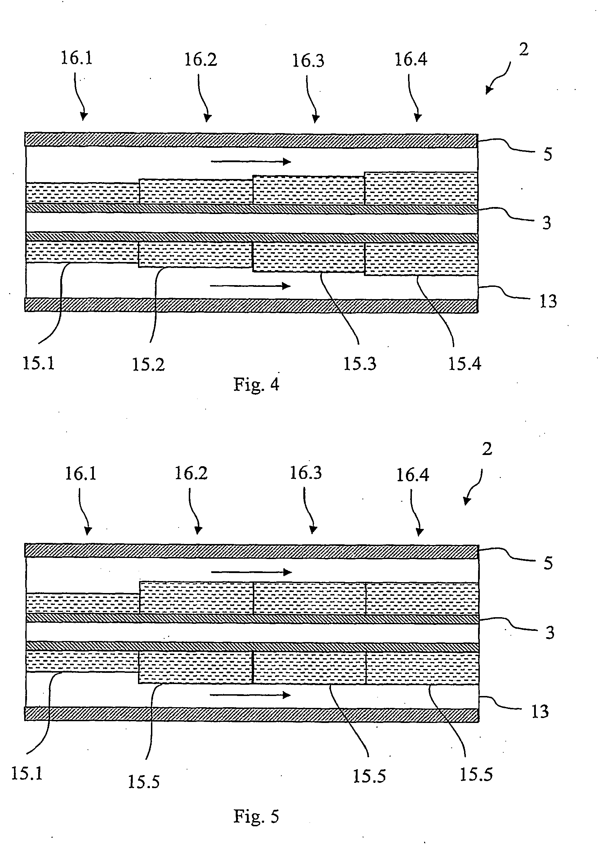

Figur 4 zeigt einen Teilbereich einer dritten Ausführung einer Elektrodenanordnung 2, bei der die Aussenelektrode 5 einen konstanten Innendurchmesser und die Innenelektrode 3 einen konstanten Aussendurchmesser hat. Der Aussendurchmesser der Innenelektrode 3 kann jedoch in Strömungsrichtung zunehmen. Ebenso kann der Innendurchmesser der Aussenelektrode 5 in Strömungsrichtung abnehmen. Die Elektrodenanordnung 2 ist beispielhaft in vier Abschnitte 16.1, 16.2, 16.3, 16.4 unterteilt, die vorzugsweise eine gleiche Länge aufweisen, wobei die Dielektrikumsschichten 15.1, 15.2, 15.3, 15.4, die den jeweiligen Abschnitten 16.1, 16.2, 16.3, 16.4 zugeordnet sind, jeweils eine unterschiedliche Schichtdicke und/oder eine unterschiedliche Dielektrikumskapazität aufweisen. Von Abschnitt zu Abschnitt nimmt die Schichtdicke der Dielektrikumsschichten 15.1, 15.2, 15.3, 15.4 in Strömungsrichtung vorzugsweise zu, was zu einer Verringerung der Spaltbreite des Ozonisierungsspalts 13 führen kann. Alternativ oder zusätzlich können die Dielektrikumskapazitäten der Dielektrikumsschichten 15.1, 15.2, 15.3, 15.4 in Strömungsrichtung abnehmen.

Besonders bevorzugt weist der erste Abschnitt 16.1 eine Spaltbreite von 0,38 Millimetern, der zweite Abschnitt 16.2 eine Spaltbreite von 0,36 Millimetern, der dritte Abschnitt 16.3 eine Spaltbreite von 0,34 Millimetern und der vierte Spalt eine Spaltbreite von 0,32 Millimetern auf. Die Dielektrikumskapazität beträgt im ersten Abschnitt 16.1 vorzugsweise 10,63 Nanofarad (nF), im zweiten Abschnitt 9,31 Nanofarad (nF), im dritten Abschnitt 8,41 Nanofarad (nF) und im vierten Abschnitt 7,80 Nanofarad (nF). Auf diese Weise lässt sich eine besonders hohe Ozongenerierung bei niedriger Energie erzielen, d.h. ein besonders hoher Wirkungsgrad erreichen. Alternative Ausgestaltungen sind denkbar. So können die Dielektrikumskapazitäten in den Abschnitten 16.1, 16.2, 16.3, 16.4 in dieser Reihenfolge beispielsweise auch die folgenden Werte annehmen: 15 Nanofarad (nF), 11,3 Nanofarad (nF), 9,2 Nanofarad (nF), 7,8 Nanofarad (nF) oder 10,63 Nanofarad (nF), 10,21 Nanofarad (nF), 9,82 Nanofarad (nF) und 9,46 Nanofarad (nF).

Insbesondere bei den auslassseitigen Abschnitten 16.3 und 16.4 können Dielektrikumskapazitäten und/oder die Schichtdicken vorteilhafterweise konstant gehalten werden. So können die Dielektrikumskapazitäten für die Abschnitte 16.1, 16.2, 16.3, 16.4 in deren Reihenfolge beispielsweise auch die folgenden Werte annehmen: 10,63 Nanofarad (nF), 8,41 Nanofarad (nF), 7,8 Nanofarad (nF) und 7,8 Nanofarad (nF). Auf diese Weise lässt sich ein besonders guter Wirkungsgrad erzielen.

Figur 5 zeigt einen Teilbereich einer vierten, besonders bevorzugten Ausführung einer Elektrodenanordnung 2 eines erfindungsgemässen Ozongenerators. Es sind beispielhaft vier Abschnitte 16.1, 16.2, 16.3, 16.4 vorgesehen, bei denen die Schichtdicke der Dielektrikumsschicht 15.1 des ersten Abschnitts 16.1 kleiner ist als die Schichtdicke der Dielektrikumsschichten 15.5 der in Strömungsrichtung sich an den ersten Abschnitt 16.1 anschliessenden Abschnitte 16.2, 16.3, 16.4. Zusätzlich oder alternativ zu einer Variation der Schichtdicke kann die Dielektrikumskapazität in dem ersten Abschnitt 16.1 grösser sein als die Dielektrikumskapazität in den Abschnitten 16.2, 16.3, 16.4, in denen sie vorteilhafterweise konstant ist. Die Änderung der Spaltbreite kann über eine Abnahme des Innendurchmessers der Aussenelektrode 5 und/oder über eine Zunahme des Aussendurchmessers der Innenelektrode 3 in Strömungsrichtung erfolgen. So kann sich beispielsweise beim Übergang von dem ersten Abschnitt 16.1 in den zweiten Abschnitt 16.2 die Aussenelektrode 5 mittels einer Stufe verengen und/oder die Innenelektrode mittels einer Stufe erweitern, wobei die Spaltbreite in den Abschnitten 16.2, 16.3, 16.4 konstant und kleiner ist als die Spaltbreite in dem ersten Abschnitt 16.1.

Es erfolgt somit bevorzugt eine zweigeteilte Leistungsaufnahme, wobei möglichst viel Leistung in dem ersten Segment 16.1 aufgenommen wird und die Leistungsaufnahme auf dem restlichen Strömungsweg in den Abschnitten 16.2, 16.3, 16.4 gedämpfter ist. Die Leistungsaufnahme in dem ersten Abschnitt 16.1 erfolgt vorzugsweise bei geringer Dämpfung, beispielsweise bei einer Dämpfung von ungefähr 0,2, während die Dämpfung in den Abschnitten 16.2, 16.3, 16.4 bevorzugt grösser als 0,3 ist. Die Dämpfung ist als der Quotient aus Gasspaltkapazität und Dielektrikumskapazität definiert.

Sind, wie in der Figur 5 dargestellt, insgesamt vier Abschnitte vorgesehen, weist vorzugsweise ein einlassseitiger Abschnitt eine hohe Leistungsaufnahme auf, während die sich an den einlassseitigen Abschnitt anschliessenden Abschnitte eine tiefere Leistungsaufnahme aufweisen. So sind in der Figur 5 ein Abschnitt 16.1 mit einer hohen Leistungsaufnahme und drei Abschnitte 16.2, 16.3, 16.4 mit einer niedrigeren Leistungsaufnahme dargestellt. Entsprechend können zwei Abschnitte 16.1 mit einer hohen Leistungsaufnahme und sechs Abschnitte mit einer niedrigeren Leistungsaufnahme vorgesehen sein, die sich in Strömungsrichtung an die zwei einlassseitigen Abschnitte 16.1 mit hoher Leistungsaufnahme anschliessen.

Sind insgesamt nur drei Abschnitte vorgesehen, so weist der einlassseitige Abschnitt vorzugsweise eine hohe Leistungsaufnahme und die sich an diesen in Strömungsrichtung anschliessenden zwei Abschnitte eine niedrige Leistungsaufnahme auf. Sind insgesamt sechs Abschnitte vorgesehen, so weisen bevorzugt die einlassseitig ersten zwei Abschnitte eine hohe Leistungsaufnahme und die sich an diese anschliessenden vier Abschnitte eine niedrigere Leistungsaufnahme auf.

Sind insgesamt fünf Abschnitte vorgesehen, so weist vorzugsweise der einlassseitige Abschnitt eine hohe Leistungsaufnahme und die sich an diesen in Strömungsrichtung anschliessenden vier Abschnitte eine niedrige Leistungsaufnahme auf.

Weitere Zuordnungen von Abschnitten und deren Leistungsaufnahme in Abhängigkeit von der Gesamtabschnittsanzahl sind denkbar, wobei der Ozongenerator vorzugsweise derart ausgestaltet ist, dass in Strömungsrichtung auf den ersten 15 bis 35 % der Gesamtlänge des Ozonisierungsspalts 13 mindestens 20 bis 40 % der Leistungsaufnahme erfolgen.

Während in der vorliegenden Anmeldung bevorzugte Ausführungen der Erfindung beschrieben sind, wird hiermit darauf hinzuweisen, dass die Erfindung nicht auf diese beschränkt ist und auch in anderer Weise innerhalb des Umfangs der folgenden Ansprüche ausgeführt werden kann.

**Patentansprüche**

1. Ozongenerator mit zwei Elektroden (3, 5) und einer dazwischen liegenden Dielektrikumsschicht (15), welche so angeordnet sind, dass zwischen der Dielektrikumsschicht (15) und einer der Elektroden (5) ein Ozonisierungsspalt (13) ausgebildet ist, durch den ein sauerstoffhaltiges Gas leitbar ist, wobei in Strömungsrichtung des Gases eine Dielektrikumskapazität ($C_D$) der Dielektrikumsschicht (15) kleiner und/oder die Schichtdicke der Dielektrikumsschicht (15) grösser wird, wobei eine Spaltbreite des Ozonisierungsspalts (13) einlassseitig grösser ist als auslassseitig.

2. Ozongenerator nach Anspruch 1, **dadurch gekennzeichnet, dass** die zwei Elektroden (3, 5) als eine Innenelektrode (3) und als eine die Innenelektrode (3) umschliessende Aussenelektrode (5) ausgeführt sind.

3. Ozongenerator nach Anspruch 2, **dadurch gekennzeichnet, dass** ein Innendurchmesser der Aussenelektrode (5) in Strömungsrichtung abnimmt.

4. Ozongenerator nach Anspruch 2 oder 3, **dadurch gekennzeichnet, dass** ein Aussendurchmesser der Innenelektrode (3) in Strömungsrichtung zunimmt.

5. Ozongenerator nach einem der vorhergehenden Ansprüche, **dadurch gekennzeichnet, dass** die Spaltbreite des Ozonisierungsspalts (13) in Strömungsrichtung des Gases kontinuierlich oder diskret grösser wird.

6. Ozongenerator nach einem der vorhergehenden Ansprüche, **dadurch gekennzeichnet, dass** einzelne in Serie geschaltete Abschnitte (16.1, 16.2, 16.3, 16.4) mit im jeweiligen Abschnitt (16.1, 16.2, 16.3, 16.4) konstanter Dielektrikumskapazität ($C_D$) vorgesehen sind, wobei stromabwärts gelegene Abschnitte (16.2, 16.3, 16.4) die gleiche oder eine kleinere Dielektrikumskapazität ($C_D$) aufweisen als stromaufwärts gelegene Abschnitte (16.1, 16.2, 16.3).

7. Ozongenerator nach einem der vorhergehenden Ansprüche, **dadurch gekennzeichnet, dass** einzelne in Serie geschaltete Abschnitte (16.1, 16.2, 16.3, 16.4) mit im jeweiligen Abschnitt konstanter Schichtdicke der Dielektrikumsschicht (15) vorgesehen sind, wobei stromabwärts gelegene Abschnitte (16.2, 16.3, 16.4) die gleiche oder eine grössere Schichtdicke aufweisen, als stromaufwärts gelegene Abschnitte (16.1, 16.2, 16.3).

8. Ozongenerator nach einem der vorhergehenden Ansprüche, **dadurch gekennzeichnet, dass** einzelne in Serie geschaltete Abschnitte (16.1, 16.2, 16.3, 16.4) mit im jeweiligen Abschnitt konstanter Spaltbreite des Ozonisierungsspalts (13) vorgesehen sind, wobei stromabwärts gelegene Abschnitte (16.2, 16.3, 16.4) eine kleinere Spaltbreite aufweisen als stromaufwärts gelegene Abschnitte (16.1, 16.2, 16.3).

9. Ozongenerator nach einem der vorhergehenden Ansprüche, **dadurch gekennzeichnet, dass** die Dielektrikumskapazität ($C_D$) einlassseitig 9 nF oder mehr als 9 nF, insbesondere 10,63 nF, und auslassseitig weniger als 9 nF, insbesondere 7.8 nF, beträgt.

10. Ozongenerator nach einem der vorhergehenden Ansprüche, **dadurch gekennzeichnet, dass** die Spaltbreite des Ozonisierungsspalts (13) einlassseitig mehr als 0,35 mm, insbesondere 0,38 mm, und auslassseitig weniger als. 0,35 mm, insbesondere 0,32 mm, beträgt.

11. Ozongenerator nach einem der vorhergehenden Ansprüche, **dadurch gekennzeichnet, dass** die Dielektrikumskapazität ($C_D$) in Strömungsrichtung des Gases im Wesentlichen um 2,83 nF abnimmt.

12. Ozongenerator nach einem der vorhergehenden Ansprüche, **dadurch gekennzeichnet, dass** die Spaltbreite des Ozonisierungsspalts (13) in Strömungsrichtung des Gases im Wesentlichen um 0,06 mm abnimmt.

13. Ozongenerator nach einem der vorhergehenden Ansprüche, **dadurch gekennzeichnet, dass** das Verhältnis von Gasspaltkapazität ($C_G$) zu Dielektrikumskapazität ($C_D$) einlassseitig im Wesentlichen 0,2 beträgt und auslassseitig grösser als 0,3 ist.

14. Ozongenerator nach einem der Ansprüche 6 bis 13, **dadurch gekennzeichnet, dass** die Abschnitte (16.1, 16.2, 16.3, 16.4) eine im Wesentlichen gleiche Länge aufweisen und dass das Verhältnis von Abschnitten (16.1) mit einer ersten Dielektrikumskapazität zu Abschnitten (16.2, 16.3, 16.4) mit einer zweiten Dielektrikumskapazität, wobei die zweite Dielektrikumskapazität grösser als die erste Dielektrikumskapazität ist, bei einer Gesamtzahl von Abschnitten (16.1, 16.2, 16.3, 16.4), die durch 4 teilbar ist, 1 zu 3 beträgt, und bei einer Gesamtzahl von Abschnitten, die durch 3 und nicht durch 4 teilbar ist, 1 zu 2 beträgt.

15. Ozongenerator nach einem der Ansprüche 7 bis 13, **dadurch gekennzeichnet, dass** die Abschnitte (16.1, 16.2, 16.3, 16.4) eine im Wesentlichen gleiche Länge aufweisen und dass das Verhältnis von Abschnitten (16.1) mit einer ersten Schichtdicke zu Abschnitten (16.2, 16.3, 16.4) mit einer zweiten Schichtdicke, wobei die zweite Schichtdicke grösser als die erste Schichtdicke ist, bei einer Gesamtzahl von Abschnitten (16.1, 16.2, 16.3, 16.4), die durch 4 teilbar ist, 1 zu 3 beträgt, und bei einer Gesamtzahl von Abschnitten, die durch 3 und nicht durch 4 teilbar ist, 1 zu 2 beträgt.

16. Ozongenerator nach einem der Ansprüche 8 bis 14, **dadurch gekennzeichnet, dass** die Abschnitte (16.1, 16.2, 16.3, 16.4) eine im Wesentlichen gleiche Länge aufweisen und dass das Verhältnis von Abschnitten (16.1) mit einer ersten Spaltbreite zu Abschnitten (16.2, 16.3, 16.4) mit einer zweiten Spaltbreite, wobei die zweite Spaltbreite kleiner als die erste Spaltbreite ist, bei einer Gesamtzahl von Abschnitten (16.1, 16.2, 16.3, 16.4), die durch 4 teilbar ist, 1 zu 3 beträgt, und bei einer Gesamtzahl von Abschnitten, die durch 3 aber nicht durch 4 teilbar ist, 1 zu 2 beträgt.

17. Ozongenerator nach einem der vorhergehenden Ansprüche, **dadurch gekennzeichnet, dass** der Ozongenerator derart ausgestaltet ist, dass in Strömungsrichtung auf den ersten 15 bis 35 % der Gesamtlänge des Ozonisierungsspalts (13) mindestens 20 bis 40 % der Leistungsaufnahme erfolgen.

## Claims

1. An ozone generator comprising two electrodes (3, 5) and a dielectric layer (15) arranged between them such that, between the dielectric layer (15) and one of the electrodes (5), an ozonizing gap (13) is formed through which an oxygen-containing gas can be conveyed, wherein, in direction of flow of the gas, a dielectric capacity ($C_D$) of the dielectric layer (15) becomes smaller and/or the layer thickness of the dielectric layer (15) becomes greater, wherein a gap width of the ozonizing gap (13) is greater on the inlet side than on the outlet side.

2. The ozone generator according to claim 1, **characterized in that** the two electrodes (3, 5) are configured as an inner electrode (3) and as an outer electrode (5) surrounding the inner electrode (3).

3. The ozone generator according to claim 2, **characterized in that** an inside diameter of the outer electrode (5) decreases in direction of flow.

4. The ozone generator according to claim 2 or 3, **characterized in that** an external diameter of the inner electrode (3) increases in direction of flow.

5. The ozone generator according to any one of the preceding claims, **characterized in that** the gap width of the ozonizing gap (13) becomes continuously or discretely greater in direction of flow of the gas.

6. The ozone generator according to any one of the preceding claims, **characterized in that** individual series-connected sections (16.1, 16.2, 16.3, 16.4) are provided which have a constant dielectric capacity ($C_D$) in the respective section (16.1, 16.2, 16.3, 16.4), whereby sections (16.2, 16.3, 16.4) located downstream have the same or a smaller dielectric capacity ($C_D$) than sections (16.1, 16.2, 16.3) located upstream.

7. The ozone generators according to any one of the preceding claims, **characterized in that** individual series-connected sections (16.1, 16.2, 16.3, 16.4) are provided which have a constant layer thickness of the dielectric layer (15) in the respective section, whereby sections (16.2, 16.3, 16.4) located downstream have the same or a greater layer thickness than sections (16.1, 16.2, 16.3) located upstream.

8. The ozone generator according to any one of the preceding claims, **characterized in that** individual series-connected sections (19.1, 16.2, 16.3, 16.4) are provided which have a constant gap width of the ozonizing gap (13) in the respective section, whereby sections (16.2, 16.3, 16.4) located downstream have a smaller gap width than sections (16.1, 16.2, 16.3) located upstream.

9. The ozone generator according to any one of the preceding claims, **characterized in that** the dielectric capacity ($C_D$) is 9 nF or more than 9 nF, in particular 10.63 nF, on the inlet side, and less than 9 nF, in particular 7.8 nF, on the outlet side.

10. The ozone generator according to any one of the preceding claims, **characterized in that** the gap width of the ozonizing gap (13) is greater than 0.35 mm, in particular 0.38 mm, on the inlet side, and less than 0.35 mm, in particular 0.32 mm, on the outlet side.

11. The ozone generator according to any one of the preceding claims, **characterized in that** the dielectric capacity ($C_D$) decreases essentially by 2.83 nF in direction of flow of the gas.

12. The ozone generator according to any one of the preceding claims, **characterized in that** the gap width of the ozonizing gap (13) essentially decreases by 0.06 mm in direction of flow of the gas.

13. The ozone generator according to any one of the preceding claims, **characterized in that** the ratio of gas gap capacity ($C_G$) to the dielectric capacity ($C_D$) is essentially 0.2 on the inlet side and greater than 0.3 on the outlet side.

14. The ozone generator according to any one of the claims 6 to 13, **characterized in that** the sections (16.1, 16.2, 16.3, 16.4) have essentially the same length and that the ratio of sections (16.1) with a first dielectric capacity to sections (16.2, 16.3, 16.4) with a second dielectric capacity, whereby the second dielectric capacity is greater than the first dielectric capacity, with a total number of sections (16.1, 16.2, 16.3, 16.4) that are divisible by 4, is 1 to 3, and, with a total number of sections which are divisible by 3 and not by 4, 1 to 2.

15. The ozone generator according to any one of the claims 7 to 13, **characterized in that** the sections (16.1, 16.2, 16.3, 16.4) have essentially the same length and that the ratio of sections (16.1) with a first layer thickness to sections (16.2, 16.3, 16.4) with a second layer thickness, whereby the second layer thickness is greater than the first layer thickness, with a total number of sections (16.1, 16.2, 16.3, 16.4) that are divisible by 4, is 1 to 3, and, with a total number of sections which are divisible by 3 and not by 4, 1 to 2.

16. The ozone generator according to any one of the claims 8 to 14, **characterized in that** the sections (16.1, 16.2, 16.3, 16.4) have essentially the same length and that the ratio of sections (16.1) with a first gap width to sections (16.2, 16.3, 16.4) with a second gap width, whereby the second gap width is less than the first gap width, with a total number of sections (16.1, 16.2, 16.3, 16.4) that are divisible by 4, is 1 to 3, and, with a total number of sections which are divisible by 3 and not by 4, 1 to 2.

17. The ozone generator according to any one of the preceding claims, **characterized in that** the ozone generator is configured in such a way that at least 20 to 40% of the power consumption takes place on the first 15 to 35% of the overall length of the ozonizing gap (13) in direction of flow.

## Revendications

1. Générateur d'ozone comprenant deux électrodes (3, 5) et une couche (15) diélectrique disposée entre elles, qui sont disposées de manière à former, entre la couche (15) diélectrique et l'une des électrodes (5), un intervalle (13) d'ozonisation, dans lequel peut passer un gaz contenant de l'oxygène, une capacité ($C_D$) diélectrique de la couche (15) diélectrique étant plus petite et/ou l'épaisseur de la couche (15) diélectrique étant plus grande dans le sens du courant de gaz, une largeur de l'intervalle (13) d'ozonisation étant plus grande du côté de l'entrée que du côté de la sortie.

2. Générateur d'ozone suivant la revendication 1, **caractérisé en ce que** les deux électrodes (3, 5) sont réalisées sous la forme d'une électrode (3) intérieure et sous la forme d'une électrode (5) extérieure entourant l'électrode (3) intérieure.

3. Générateur d'ozone, suivant la revendication 2, **caractérisé en ce qu'**un diamètre intérieur de l'électrode (5) extérieure diminue dans le sens du courant.

4. Générateur d'ozone suivant la revendication 2 ou 3, **caractérisé en ce qu'**un diamètre extérieur de l'électrode (3) intérieure augmente dans le sens du courant.

5. Générateur d'ozone suivant l'une des revendications précédentes, **caractérisé en ce que** la largeur de l'intervalle (13) d'ozonisation devient plus grand continuellement ou de manière discontinue dans le sens du courant de gaz.

6. Générateur d'ozone suivant l'une des revendications précédentes, **caractérisé en ce qu'**il est prévu des parties (16.1, 16.2, 16.3, 16.4) montées en série et ayant dans chaque partie (16.1, 16.2, 16.3, 16.4) une capacité ($C_D$)

diélectrique constante, des parties (16.1, 16.2, 16.3, 16.4) en aval ayant la même capacité ($C_D$) diélectrique ou une capacité ($C_D$) diélectrique plus petite que des parties (16.1, 16.2, 16.3) en amont.

7. Générateur d'ozone suivant l'une des revendications précédentes, **caractérisé en ce qu'**il est prévu des parties (16.1, 16.2, 16.3, 16.4) montées en série ayant dans chaque partie une épaisseur constante de la couche (15) diélectrique, des parties (16.1, 16.2, 16.3, 16.4) en aval ayant la même épaisseur de couche ou une épaisseur de couche plus grande que des parties (16.1, 16.2, 16.3) montées en amont.

8. Générateur d'ozone suivant l'une des revendications précédentes, **caractérisé en ce qu'**il est prévu des parties (16.1, 16.2, 16.3, 16.4) montées en série ayant dans chaque partie une largeur constante de l'intervalle (13) d'ozonisation, des parties (16.1, 16.2, 16.3, 16.4) en aval ayant une largeur d'intervalle plus petite que des parties (16.1, 16.2, 16.3) en amont.

9. Générateur d'ozone suivant l'une des revendications précédentes, **caractérisé en ce que** la capacité ($C_D$) diélectrique est, du côté de l'entrée, supérieure ou égale à 9 nF, notamment de 10,63 nF et, du côté de la sortie, inférieure à 9 nF, notamment de 7,8 nF.

10. Générateur d'ozone suivant l'une des revendications précédentes, **caractérisé en ce que** la largeur de l'intervalle (13) d'ozonisation est, du côté de l'entrée, supérieure à 0,35 mm, notamment de 0,38 mm et du côté de la sortie inférieure à 0,35 mm, notamment de 0,32 mm.

11. Générateur d'ozone suivant l'une des revendications précédentes, **caractérisé en ce que** la capacité ($C_D$) diélectrique diminue dans le sens du courant du gaz sensiblement de 2,83 nF.

12. Générateur d'ozone suivant l'une des revendications précédentes, **caractérisé en ce que** la largeur de l'intervalle (13) d'ozonisation diminue dans le sens du courant du gaz sensiblement de 0,06 mm.

13. Générateur d'ozone suivant l'une des revendications précédentes, **caractérisé en ce que** le rapport de la capacité ($C_G$) de l'intervalle pour le gaz à la capacité ($C_D$) diélectrique est, du côté de l'entrée, sensiblement de 0,2 et, du côté de la sortie, plus grand que 0,3.

14. Générateur d'ozone suivant l'une des revendications 6 à 13, **caractérisé en ce que** les parties (16.1, 16.2, 16.3, 16.4) ont sensiblement la même longueur et **en ce que** le rapport de parties (16.1) ayant une première capacité diélectrique à des parties (16.1, 16.2, 16.3, 16.4) ayant une deuxième capacité diélectrique, la deuxième capacité diélectrique étant plus grande que la première capacité diélectrique, va, pour un nombre total de parties (16.1, 16.2, 16.3, 16.4) divisible par 4, de 1 à 3 et, pour un nombre total de parties divisible par 3 mais non divisible 4, de 1 à 2.

15. Générateur d'ozone suivant l'une des revendications 7 à 13, **caractérisé en ce que** les parties (16.1, 16.2, 16.3, 16.4) ont sensiblement la même longueur et **en ce que** le rapport de parties (16.1) ayant une première épaisseur de couche aux parties (16.2, 16.3, 16.4) ayant une deuxième épaisseur de couche, la deuxième épaisseur de couche étant plus grande que la première épaisseur de couche, va, pour un nombre total de parties (16.1, 16.2, 16.3, 16.4) qui est divisible par 4, de 1 à 3 et, pour un nombre total de parties qui est divisible par 3 et n'est pas divisible par 4, de 1 à 2.

16. Générateur d'ozone suivant l'une des revendications 8 à 14, **caractérisé en ce que** les parties (16.1, 16.2, 16.3, 16.4) ont sensiblement la même longueur et **en ce que** le rapport de parties (16.1) ayant une première largeur de l'intervalle à des parties (16.2, 16.3, 16.4) ayant une deuxième largeur de l'intervalle, la deuxième largeur de l'intervalle étant plus petite que la première largeur de l'intervalle, va, pour un nombre total de parties (16.1, 16.2, 16.3, 16.4) divisible par 4, de 1 à 3, et, pour un nombre total de parties divisibles par 3 mais non divisible par 4, de 1 à 2.

17. Générateur d'ozone suivant l'une des revendications précédentes, **caractérisé en ce que** le générateur d'ozone est tel qu'au moins 20 à 40 % de la puissance absorbée a lieu, dans le sens du courant, sur les premiers 15 à 35 % de la longueur totale de l'intervalle (13) d'ozonisation.

Fig. 1

Fig. 2

Fig. 3

16.1 16.2 16.3 16.4 2

5

3

13

15.1 15.2 15.3 15.4

Fig. 4

16.1 16.2 16.3 16.4 2

5

3

13

15.1 15.5 15.5 15.5

Fig. 5

**EP 1 910 223 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 3220018 C2
- CH 2005000458 W